# EUROPEAN PATENT SPECIFICATION

(11) **EP 1 593 529 B1**
(45) Date of publication and mention of the grant of the patent: **15.08.2007**
(21) Application number: 05103530.1
(22) Date of filing: 28.04.2005
(51) Int. Cl.: B60C 1/00, C08L 9/06, C08L 7/00

(54) **Natural rubber-rich composition and tire with tread thereof**
Naturkautschukreiche Zusammensetzung und Reifen mit daraus hergestellter Lauffläche
Pneu avec une bande de roulement contenant un mélange riche en caoutchouc naturel

(30) Priority: 02.06.2004 US 859524; 03.05.2004 US 837740
(43) Date of publication of application: 09.11.2005
(73) Proprietor: THE GOODYEAR TIRE & RUBBER COMPANY, Akron, Ohio 44316-0001 (US)
(72) Inventor: Sandstrom, Paul Harry, Cuyahoga Falls, Ohio 44223 (US); Halasa, Adel Farhan, Bath, Ohio 44210 (US); Hsu, Wen-Liang, Cuyahoga Falls, Ohio 44223 (US); Verthe, John Joseph Andre, Kent, Ohio 44240 (US); Jasiunas, Chad Aaron, Copley, Ohio 44321 (US)
(74) Representative: Kutsch, Bernd

(56) References cited:
- EP-A- 0 589 239
- EP-A- 1 391 326
- US-A- 4 503 204
- US-A- 5 216 080

## Description

### Field of the Invention

This invention relates to a natural rubber-rich rubber composition and a tire with a tread thereof. A partial replacement of the natural rubber in the natural rubber-rich tire tread is accomplished by an inclusion of a specialized trans 1,4-styrene/butadiene copolymer rubber characterized by having a combination of bound styrene content and microstructure limitations. The tire tread rubber composition is comprised of a blend of the specialized trans 1,4-styrene/butadiene rubber and cis 1,4-polyisoprene natural rubber optionally together with at least one additional diene-based elastomer in which the natural rubber remains a major portion of the elastomers in the tread rubber composition. A significant aspect of the invention is a partial replacement of natural cis 1,4-polyisoprene rubber in the tread rubber composition.

### Background of the Invention

A challenge is presented of replacing a portion of natural cis 1,4-polyisoprene rubber with a synthetic polymer, or elastomer, in a natural rubber-rich tire tread rubber composition to achieve a rubber composition of similar physical properties. A motivation for such challenge is a desire for a natural rubber alternative, at least a partial alternative, in a form of a synthetic rubber to offset relative availability and/or cost considerations of natural rubber.

Therefore, such challenge has been undertaken to evaluate the feasibility of replacing a portion of natural rubber in a tire tread (for rubber treads which contain a significant amount of natural rubber such as treads for heavy duty tires) with a synthetic rubber.

A simple partial substitution of a synthetic elastomer for a portion of the natural rubber contained in a natural rubber-rich tire tread rubber composition which contains a significant natural rubber content is not considered herein to be a normal feasible alternative where it is desired to substitute a portion of the natural rubber with a synthetic elastomer yet achieve a rubber composition with physical properties similar to the unsubstituted natural rubber-rich rubber composition.

It is considered herein that a significant consideration for the synthetic elastomer to be used as a candidate for partial substitution for the natural rubber in a natural rubber-rich rubber composition for a tire tread is the resultant tear strength property of the rubber composition for which it is considered herein should preferably be at least 90 percent and more preferably within 10 percent, of the tear strength of the natural rubber-rich rubber composition itself. It is considered herein that such resultant comparative tear strength property of the rubber composition is preferably a first physical property for considering a high trans 1,4-styrene/butadiene copolymer elastomer as a candidate for such partial substitution. Accordingly, in a preferred practice of this invention, if a partial substitution of a high trans 1,4-styrene/butadiene copolymer elastomer provides a suitable tear strength property both at 23°C and at 95°C, then other significant physical properties of the resultant rubber composition may be considered, particularly internal heat buildup related hysteretic properties such as rebound values.

Accordingly, for this invention, it is considered herein that if a partial substitution of a high trans 1,4-styrene/butadiene copolymer elastomer for a the natural rubber in a natural rubber-rich tread rubber composition does not result in such comparable tear strength property at both 23°C and 95°C, it would be considered herein to be inappropriate for use as a significant replacement of natural rubber in a tire tread of a relatively large tire intended, or designed, to experience a significant load under working conditions (during use on an associated vehicle) with an expected resultant significant internal heat buildup, whether or not its other physical properties would otherwise be appropriate.

In practice, a suitable tear strength property of a rubber composition at 23°C or 95°C is often desired to promote, or enhance, chip-chunk resistance of a tire tread.

In practice, pneumatic rubber tires conventionally have rubber treads which contain a running surface of the tire intended to be ground contacting. Such tire treads are subject, under operating conditions, to considerable dynamic distortion and flexing, abrasion due to scuffing, fatigue cracking and weathering such as, for example, atmospheric aging.

Tires, particularly large tires such as for example, large off-the-road, truck, agricultural tractor, as well as aircraft tires, which are intended to be subject to heavy loads and inherent tendency of internal heat build up and associated high temperature operation, generally contain a significant natural cis 1,4-polyisoprene rubber content, because of, for example, the well known heat durability of the natural rubber as compared to synthetic diene based elastomers in general. Such tires may have a tread which is of a natural rubber-rich rubber composition, namely which contains more than 50 phr of natural rubber.

Significant physical properties for the natural rubber-rich tire tread rubber compositions are considered herein to be Rebound (at 100°C) and tan delta (at 100°C) which contribute to rolling resistance of the tire and therefore fuel economy of the associated vehicle, with higher values being desired for the rebound property and lower values being desired for the tan delta property.

Additional desirable physical properties are considered herein to be higher low strain stiffness properties, in combination with the above rebound and tan delta properties, as indicated by Shore A hardness values and G' at 10 percent strain values at 100°C to promote cornering coefficient and handling for the tire and resistance to tread wear.

Accordingly, it is readily seen that a partial substitution of a synthetic rubber for a portion of the natural rubber in a natural rubber-rich tread rubber composition is not a simple matter, and requires more than routine experimentation, where it is desired to substantially retain, or improve upon, a suitable balance of the representative physical properties of the natural rubber-rich tread rubber composition itself.

Generally, such tire tread rubber compositions may also contain various amounts of additional synthetic diene-based elastomers. Such additional synthetic diene based elastomers may include, for example, cis 1,4-polybutadiene rubber to enhance, for example, abrasion resistance and associated resistance to tread wear as well as styrene/butadiene copolymer elastomers to enhance, for example tread traction.

For example, preparation and use of trans 1,4-styrene/butadiene by a specified catalyst system has been described in US-A- 6,627,715.

Partial replacement of natural rubber with trans copolymers of isoprene and 1,3-butadiene has been suggested in US-A- 5,844,044.

However, for this invention, a tire tread, with running surface, is presented of a rubber composition which is comprised of a natural rubber-rich rubber composition in which a major rubber portion of its rubber content is natural cis 1,4-polyisoprene rubber and minor rubber portion as a specialized trans 1,4-styrene/butadiene rubber. The specialized trans 1,4-styrene/butadiene rubber has a bound styrene content in a range of from 15 to 35 percent and a microstructure of its polybutadiene portion composed of from 50 to 80 percent trans 1,4-isomeric units.

In the practice of this invention, the specialized trans 1,4-styrene/butadiene rubbers have been observed to enable a partial replacement of the natural cis 1,4-polyisoprene rubber in natural rubber-rich tread compositions of relatively large tires which are designed to experience relatively large loads under working conditions with an associated internal heat generation.

A reference to glass transition temperature, or Tg, of an elastomer or sulfur vulcanizable polymer, particularly the specialized trans 1,4-styrene/polybutadiene polymer, represents the glass transition temperature of the respective elastomer or sulfur vulcanizable polymer in its uncured state. The Tg can be suitably determined by a differential scanning calorimeter (DSC) at a temperature rate of increase of 10°C per minute, (ASTM 3418).

A reference to melt point, or Tm, of a sulfur vulcanizable polymer, particularly the specialized trans 1,4-polybutadiene polymer, represents its melt point temperature in its uncured state, using basically the same or similar procedural method as for the Tg determination, using a temperature rate of increase of 10°C per minute.

A reference to molecular weight, such as a weight average molecular weight (Mw), or number average molecular weight (Mn), of an elastomer or sulfur vulcanizable polymer, particularly the specialized trans 1,4-styrene/butadiene polymer, represents the respective molecular weight of the respective elastomer or sulfur vulcanizable polymer in its uncured state. The molecular weight can be suitably determined by GPC (gel permeation chromatograph instrument) analysis.

A reference to Mooney (ML 1+4) viscosity of an elastomer or sulfur vulcanizable polymer, particularly the specialized trans 1,4-polybutadiene polymer, represents the viscosity of the respective elastomer or sulfur vulcanizable polymer in its uncured state. The Mooney (ML 1+4) viscosity at 100°C relates to its "Mooney Large" viscosity, taken at 100°C using a one minute warm up time and a four minute period of viscosity measurement.

In the description of this invention, the terms "compounded" rubber compositions and "compounds",where used, refer to the respective rubber compositions which have been compounded with appropriate compounding ingredients such as, for example, carbon black, oil, stearic acid, zinc oxide, silica, wax, antidegradants, resin(s), sulfur and accelerator(s) and silica and silica coupler where appropriate. The terms "rubber" and "elastomer" may be used interchangeably. Reference to a high trans 1,4-styrene/butadiene copolymer elastomer may also be made herein more simply in terms of a polymer or copolymer. The amounts of materials are usually expressed in parts of material per 100 parts of rubber polymer by weight (phr) unless otherwise indicated.

EP-A- 1391326 discloses a rubber composition according to the preamble of claim 1.

EP-A-0589239 describes a styrene/butadiene rubber for truck tires. US-A- 5,216,080 discloses a further styrene/butadiene copolymer rubber. US-A-4,503,204 describes a composition useful as catalyst in solution polymerization.

### Disclosure and Practice of the Invention

In accordance with this invention, a natural rubber-rich rubber composition according to claim 1 and a tire having a tread thereof (with a tire running surface intended to be ground contacting) is provided, wherein said natural rubber-rich rubber composition and tread of said tire is of a natural rubber-rich rubber composition comprising, based upon parts by weight per 100 parts by weight rubber (phr):
(A) from 2 to 45 phr, alternately from 5 to 40 phr, of a specialized trans 1,4-styrene/butadiene rubber having a bound styrene content in a range of from 15 to 35, alternately from 20 to 30, percent and a microstructure of the polybutadiene portion composed of from 50 to 80 percent trans 1,4- isomeric units, from 10 to 20 percent cis 1,4- isomeric units and from 2 to 10 percent vinyl 1,2- isomeric units;
(B) from 98 to 55, alternately 95 to 60, phr of natural cis 1,4-polyisoprene rubber; and
(C) from zero to 20, alternately 5 to 15, phr of at least one additional synthetic diene-based elastomer, so long as said natural rubber content of said rubber composition is at least 55 phr, selected from polymers of isoprene and/or 1,3-butadiene (in addition to said specialized trans 1,4-styrene/butadiene rubber) and copolymers of styrene together with isoprene and/or 1,3-butadiene; and
(D) from 30 to 120 phr of particulate reinforcing fillers comprised of:
   (1) 5 to 120, alternately from 30 to 115, phr of rubber reinforcing carbon black, and
   (2) from zero to 60, alternately from 5 to 60 and further alternately from 5 to 25, phr of amorphous synthetic silica, preferably precipitated silica.

Preferably said natural rubber-rich tread rubber composition has a tear resistance property at both 23°C and 95°C, according to hereinafter described test G-tear, of at least 90, and preferably within 10 percent of the corresponding tear resistance properties (at both 23°C and 95°C, respectively) of the natural rubber-rich tread rubber composition in the absence of said specialized trans 1,4-styrene/butadiene copolymer elastomer.

Optionally, the reinforcing filler may also contain a silica-containing carbon black which contain domains of silica on its surface wherein the silica domains contain hydroxyl groups on their surfaces.

The silica (e.g. precipitated silica) may optionally, and if desired, be used in conjunction with a silica coupler to couple the silica to the elastomer(s), to thus enhance its effect as reinforcement for the elastomer composition. Use of silica couplers for such purpose are well known and typically have a moiety reactive with the silica and another moiety interactive with the elastomer(s) to create the silica-to-rubber coupling effect.

In practice, as hereinbefore indicated, the specialized trans 1,4-styrene/butadiene rubber preferably has a glass transition temperature (Tg) in a range of from -60°C to -90°C, alternately from -65°C to -85°C.

In practice, as hereinbefore indicated, the specialized trans 1,4-styrene/butadiene rubber preferably has a Mooney (ML1+4), at 100°C, viscosity in a range of from 50 to 100, alternately from 50 to 85.

The specialized trans 1,4-styrene/butadiene rubber of the invention is prepared, in one alternative, by polymerization in an organic solvent in the presence of a catalyst composite composed of the barium salt of di(ethylene glycol) ethylether (BaDEGEE), tri-n-octylaluminum (TOA) and n-butyl lithium (n-BuLi) in a molar ratio of the BaDEGEE to TOA to n-BuLi in a range of 1:4:3, which is intended to be an approximate molar ratio, so long as the resulting trans 1,4-styrene/butadiene polymer is the said specialized trans 1,4-styrene/butadiene copolymer. An amine containing barium alkoxide, such as the barium salt of 2-N,N-dimethyl amino ethoxy ethanol (Ba-N,N-DMEE) can be used in place of BaDEGEE so long as the specialized copolymer is produced. The approximate molar ratio of the barium salt of 2-N,N-dimethyl amino ethoxy ethanol (Ba-N,N-DMEE), tri-n-octylaluminum (TOA) and n-butyl lithium (n-BuLi) in a molar ratio of the Ba-N,N-DMEE to TOA to n-BuLi is in a range of 1:4:3. This catalyst system using the amine containing barium alkoxide, Ba-N,N-DMEE, was described previously in US-A- 6,627,715.

For example, the catalyst composite may be composed of 7.2 ml of a 0.29 M solution of the barium salt of di(ethylene glycol) ethylether (BaDEGEE) in suitable solvent such as, for example, ethylbenzene, 16.8 ml of a 1 M solution of tri-n-octylaluminum (TOA) in a suitable solvent such as, for example, hexane and 7.9 ml of a 1.6 M solution of n-butyl lithium (n-BuLi) in a suitable solvent such as, for example, hexane. The molar ratio of the three catalyst components, namely the BaDEGEE to TOA to n-BuLi may be, for example, said 1:4:3.

As disclosed in US-A- 6,627,715, a four component catalyst system which consists of the barium salt of di(ethylene glycol) ethylether (BaDEGEE), amine, the tri-n-ocytylaluminum (TOA) and the n-butyl lithium (n-BuLi) may also be used to prepare high trans 1,4-styrene/butadiene polymers for use as a partial replacement of natural rubber in a natural rubber-rich tread rubber composition. The molar ratio of the BaDEGEE, to amine to TOA to n-BuLi catalyst components is 1:1:4:3, which is intended to be an approximate ratio in which the amine can be a primary, secondary or tertiary amine and may be a cyclic, acyclic, aromatic or aliphatic amine, with exemplary amines being, for example, n-butyl amine, isobutyl amine, tert-butyl amine, pyrrolidine, piperidine and TMEDA (N, N, N',N'-tetramethylethylenediamine, preferably pyrrolidine, so long as the resulting trans 1,4-styrene/butadiene polymer is the said specialized trans 1,4-styrene/butadiene copolymer which is considered herein to not require undue experimentation by one having skill in such art.

In one aspect, the catalyst composite may be pre-formed prior to introduction to the 1,3-butadiene monomer or may be formed in situ by separate addition, or introduction, of the catalyst components to the 1,3-butadiene monomer so long as the resulting trans 1,4-styrene/butadiene polymer is the aforesaid specialized trans 1,4-styrene/butadiene polymer. The pre-formed catalyst composite may, for example, be a tri-component pre-formed composite comprised of all three of the BaDEGEE, TOA and BuLi components prior to introduction to the 1,3-butadiene monomer or may be comprised of a dual pre-formed component composite comprised of the BaDEGEE and TOA components to which the n-BuLi component is added prior to introduction o the 1,3-butadiene monomer.

In one aspect, the organic solvent polymerization may be conducted as a batch or as a continuous polymerization process. Batch polymerization and continuous polymerization processes are, in general, well known to those having skill in such art.

As hereinbefore mentioned, a coupling agent may, if desired, be utilized with the silica to aid in its reinforcement of the rubber composition which contains the silica. Such coupling agent conventionally contains a moiety reactive with hydroxyl groups on the silica (e.g. precipitated silica) and another and different moiety interactive with the diene hydrocarbon based elastomer.

The hereinbefore referenced silica coupler might be, for example, a bis(trialkoxysilylalkyl) polysulfide which contains from 2 to 8 sulfur atoms, usually an average of from 2.3 to 4, sulfur atoms in its polysulfidic bridge. The alkyl groups may be selected, for example, from methyl, ethyl and propyl radicals. Exemplary of such coupler might be, for example, bis-(triethoxysilylpropyl) polysulfide.

Representative of additional synthetic diene based elastomers for said tread rubber composition are, for example, synthetic cis 1,4-polyisoprene rubber, cis 1,4-polybutadiene rubber, styrene/butadiene copolymer rubber, isoprene/butadiene copolymer rubber, styrene/isoprene/butadiene terpolymer rubber, and 3,4-polyisoprene rubber.

It is readily understood by those having skill in the art that the rubber compositions would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black.

Typical additions of reinforcing carbon black have been hereinbefore discussed. Typical amounts of tackifier resins, if used, may comprise 0.5 to 10 phr. Typical amounts of processing aids may comprise 1 to 20 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr.

The vulcanization is conducted in the presence of a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators in which the primary accelerator is generally used in the larger amount (0.5 to 2 phr), and a secondary accelerator which is generally used in smaller amounts (0.05-0.50 phr) in order to activate and to improve the properties of the vulcanizate.

Preferably, the primary accelerator is a sulfenamide. If a second accelerator is used, the secondary accelerator is preferably a guanidine, dithiocarbamate or thiuram compound.

Sometimes, the combination of zinc oxide, fatty acid, sulfur and accelerator(s) may be collectively referred to as curatives.

The tire can be built, shaped, molded and cured by various methods which will be readily apparent to those having skill in such art.

The invention may be better understood by reference to the following example in which the parts and percentages are by weight unless otherwise indicated.

### EXAMPLE I

### Preparation of High Trans Styrene-Butadiene Copolymer by A Preformed Catalyst

This example represents preparation of a high trans 1,4-styrene-butadiene copolymer in a batch reactor with a preformed catalyst with a bound styrene content of 12.5 percent. The high trans 1,4-styrene/butadiene copolymer is referred herein as polymer Sample C which is summarized in Table 1 of Example III.

The preformed catalyst was prepared by reacting 20 ml of 0.9 M barium salt of di(ethylene glycol) ethylether (BaDEGEE) in ethylbenzene solvent with 72 ml of 1 M trioctylaluminum (TOA) in hexane solvent. The resulting catalyst mixture was heat aged at 70°C for 30 minutes to form a pre-alkylated barium compound. Upon cooling to ambient temperature, 33.8 ml of 1.6 M n-butyllithium (n-BuLi) was added to the pre-alkylated barium compound to form a preformed catalyst for making trans styrene-butadiene copolymers. The molar ratio of BaDEGEE to TOA and to n-BuLi was 1:4:3. The molarity of the preformed catalyst was 0.143M in barium. This preformed catalyst composite can be used for making a high trans styrene-butadiene copolymers directly with or without additional heat aging at 70°C.

For the preparation of the high trans styrene-butadiene copolymer for this example, 2200 g (grams) of a silica/alumina/molecular sieve dried pre-mixture (premix) of 1,3-butadiene and styrene monomers and hexane solvent was prepared which contained 20.1 weight percent of styrene and 1,3-butadiene. The ratio of styrene to butadiene was 16.5:83.5. The premix was charged into a one-gallon (3.8 liters) reactor.

To the premix in the reactor was then added 14.5 ml (milliliters) of a preformed catalyst (0.143 M in barium) solution as described above without additional heat aging.

The polymerization of styrene and 1,3-butadiene monomers were carried out at 90°C for 3.5 hours. The GC (gas chromatographic) analyses of the residual unreacted monomers contained in the polymerization mixture indicated that the monomer conversions were 95 percent and 78 percent, respectively for 1,3 butadiene and styrene at this time. Three milliliters (ml) of neat ethanol was added to shortstop the polymerization. The shortstopped polymer cement was then removed from the reactor and stabilized with 1 phm (parts per hundred parts of monomer by weight) of antioxidant. The volatile solvents (hexane, etc) were substantially removed by evaporation under atmospheric conditions at 50°C and the recovered polymer was further dried in a vacuum oven at 50°C.

The recovered styrene-butadiene copolymer was determined to have a glass transition temperature (Tg) of -80.3°C and a melt temperature (Tm) of 13.1°C.

The recovered styrene-butadiene copolymer was determined by a carbon 13 NMR (nuclear magnetic resonance analytical instrument) to be composed of 12.5 percent styrene units, 3.2 percent 1,2-polybutadiene units, 11.8 percent cis-1,4-polybutadiene units, and 72.4 percent trans-1,4-polybutadiene units. The trans -1,4-polybutadiene unit content was 82.8 percent based on the polybutadine portion of the styrene/butadiene polymer. The high trans 1,4-styrene/butadiene copolymer (HTSBR) was determined to have a Mooney viscosity (ML1+4) at 100°C of 75. According to GPC (Gel Permeation Chromatograph analytical instrument) analysis, the HTSBR had a number average molecular weight (Mn) of 129,000 and a weight average molecular weight (Mw) of 181,000. The heterogeneity index (HI) of the HTSBR, represented as its (Mw/Mn) ratio, was therefore 1.40. The HTSBR prepared here is identified as Sample C that will be used for compound study described later. A detailed description of the catalyst system is disclosed in US-A-6,627,715.

### EXAMPLE II

### Preparation of High Trans Styrene-Butadiene Copolymer by Continuous Polymerization

This example represents preparation of a high trans 1,4-styrene-butadiene copolymer in a continuous reactor with a preformed catalyst with a bound styrene content of 1.6 percent. The high trans 1,4-styrene/butadiene copolymer is referred herein as polymer Sample A which is summarized in Table 1 of Example III.

The preparation of the high trans styrene-butadiene copolymer by a continuous polymerization process by polymerization of styrene and 1,3-butadiene monomer with a catalyst system composed of barium salt of di(ethylene glycol) ethylether (BaDEGEE), tri-n-octylaluminum (TOA) and n-butyllithium (n-BuLi).

Samples of high trans styrene-butadiene copolymers were prepared in continuous polymerization reactors. The samples were individually prepared by conducting the respective polymerization in two sequential five liter jacketed reactors connected in series.

Each reactor was equipped with three 3-inch (7.6 cm) diameter axial flow turbines (AFT's) and were equipped with internal baffles to aid in the mixing process. Agitation in the reactors was conducted at a turbine rotor speed of approximately 450 rpm. Residence time was set at 1.62 hours in the first reactor, 0.084 hours in the connective tubular piping between the reactors, 1.63 hours in the second reactor, and 0.117 hours in the connective tubular piping to the cement mixer (a total of 3.45 hours). The first reactor's internal temperature was controlled at 200°F ( 93°C) and the second reactor's internal temperature was controlled at 195°F ( 90°C), assisted by an ethylene glycol fed cooling jacket around each of the reactors.

Respective materials were metered and pressure fed into the continuous reactor configuration. The material entry system into the first reactor consisted of an inner dip leg composed of 1/8 inch (0.32 cm) SS (stainless steel) tubing inside of an outer dip leg composed of 0.25 inch (0.64 cm) SS tubing. The tubing for each of the two dip legs passed through a separate temperature controlled heat exchanger prior to entering the reactor. In case of making extremely high styrene containing HTSBR (such as Sample E which contains 36 percent styrene and will be described in Example III), the additional cocatalysts, such as potassium 2,7-dimethyl-2-octoxide (KDMO) might be needed to consume most of styrene monomer. This co-catalyst can be fed into the bottom of the cement mixer with the cement being fed from the second reactor.

One of such materials fed into the first reactor was a premix of the styrene and 1,3-butadiene monomers in hexane solvent composed of 20.1 weight percent styrene and 1,3-butadiene in hexane, which also contained 50 parts of 1,2-butadiene per million parts 1,3-butadiene. The styrene to 1,3-butadiene ratio was 2:18. The monomer pre-mix was metered through a heat exchanger at 200°F (93°C) at a rate of 4956.4 grams per hour and into the first reactor.

Another material fed into the first reactor was a 10 weight percent solution of BaDEGEE (barium salt of di(ethyleneglycol) ethylether) in hexane with a flow rate of 19.66 grams per hour was added to a 25 weight percent TOA (trioctylaluminum) in hexane with a flow rate of 29.13 grams per hour, and this mixture was added to a 3.96 weight percent n-BuLi (n-butyllithium) in hexane with a flow rate of 24.10 grams per hour. This solution was passed through a heat exchanger at 200°F (93°C) and then entered the first reactor through the inner dipleg. This gave a feed rate of 0.5 millimoles of barium per 100 grams of monomer, 4 moles of TOA per mole of barium, and 3 moles n-BuLi per mole of barium.

The experimental preparation of the high trans styrene-butadiene copolymers was started with the reactors full of dry hexane. The polymerizate, composed of a partially reacted styrene and 1,3-butadiene monomers in the solvent and catalyst system and sometimes referred to as a cement, flowed from the first reactor to the second reactor, through a cement mixer. The experimental polymer preparation was allowed to proceed for 4.5 hours to allow for three complete turnovers in the system and to achieve a steady state in the system. The system was determined to be at steady state when the temperature profile in the reactors and the reactor monomer to polymer conversions maintained constant values.

After achieving the steady state, the resultant styrene-butadiene copolymer cement was collected for the next two hours. One-half hour after cement collection began, 24.2 grams of 10 percent by weight of isopropanol in hexane (4.0 moles of isopropanol per mole of barium) was added to stop the polymerization and 201.5 grams of 10 percent by weight of antioxidant in hexane was added to protect and stabilize the polymer.

The cement (polymer dissolved in hexane) was recovered in a five gallon (18.9 liter) bucket. The cement was then poured from the bucket into polyethylene film lined trays and dried in an air oven at 130°F (54°C) until all of the solvent was evaporated.

The recovered styrene-butadiene copolymer was then analyzed by DSC (differential scanning calorimeter), NMR (nuclear magnetic resonance), GPC (Gel permeation chromatography), and Mooney (ML1+4) testing. The results of the testing showed a Mooney (ML 1+4) viscosity at 100°C of 80, a Tg of -89°C and one melt (Tm) temperature of 23°C.

The microstructure of the high trans styrene-butadiene copolymer was determined to be comprised of a polystyrene content of 1.6 percent, 1,2-polybutadiene content of 3.5 percent, a cis-1,4-polybutadiene content of 14.9 percent and a trans-1,4-polybutadiene content of 80 percent. Its molecular weights were determined to be an Mn of 94,480 and Mw of 251,800 with a Mw/Mn heterogeneity Index (HI) of 2.67. The HTSBR prepared in this example is identified as Sample, A which will be used for compound study, described later.

### EXAMPLE III

### Preparation of High Trans Styrene-Butadiene Copolymer by Continuous Polymerization

This example represents preparation of high trans 1,4-styrene/butadiene copolymers in continuous reactors with a preformed catalyst with bound styrene contents of 7.2, 26.7 and 36.1, respectively. The high trans 1,4-styrene/butadiene copolymers are referred herein as polymer Samples B, D and E which are summarized in Table 1 of this Example III.

The preparation is by a continuous polymerization process by polymerization of styrene and 1,3-butadiene monomer using the continuous polymerization process described in Example II with a catalyst system composed of barium salt of di(ethylene glycol) ethylether (BaDEGEE), tri-n-octylaluminum (TOA) and n-butyllithium (n-BuLi).

In the case of making polymer Sample E, an additional co-catalyst KDMO (potassium 2,7-dimethyl-2-octoxide) was to be used to complete the polymerization of most of the styrene monomer, as described in Example II. The molar ratio of KDMO to n-BuLi was 1.5:1.

The following Table 1 represents a summary of various properties of polymer Samples A through E. Preparation of polymer Sample A is shown in Example II, polymer Sample C in Example I and polymer Samples B, D and E in this Example III.

**Table 1**

| Samples | A | B | C | D | E |
|---|---|---|---|---|---|
| Premixed Catalyst | | | | | |
| BaDEGEE/TOA/n-BuLi Molar ratio | 1/4/3 | 1/4/3 | 1/4/3 | 1/4/3 | 1/4/3 |
| Styrene | 1.6 | 7.2 | 12.5 | 26.7 | 36.1 |
| Trans 1,4-PBd | 80 | 73.5 | 72.4 | 57.5 | 47.9 |
| Cis 1,4-PBd | 14.9 | 15.4 | 11.8 | 12 | 10.6 |
| Vinyl 1,2-PBd | 3.5 | 3.9 | 3.2 | 3.8 | 5.4 |
| Mooney (1+ML4) (100°C) | 80 | 66 | 75 | 62 | 66 |
| Tg (on set) (°C) | -89 | -85.5 | -80.3 | -69.7 | -67.2 |
| Tm (°C) | 24.8 | 9.6 | 13.1 | - | - |
| Mn (10³) | 127.7 | 108.3 | 129 | 145.9 | 206.2 |
| Mw (10³) | 302.7 | 368.2 | 181 | 481.6 | 659.9 |
| HI (Mw/Mn) | 2.7 | 3.4 | 1.4 | 3.3 | 3.2 |

### EXAMPLE IV

### Rubber Compositions Which Contain a Partial Replacement of Natural Rubber with Trans 1,4-Styrene/Butadiene Polymer Samples A and B

Experiments were conducted to evaluate the feasibility of replacing a portion of natural rubber in a rubber composition with the trans 1,4-styrene/butadiene polymer Samples A and B which contained bound styrene contents of 1.6 and 7.2 percent, respectively.

The natural rubber-rich samples of rubber compositions are identified in this Example as rubber Samples "Cpd 1", "Cpd 2" and "Cpd 3", with rubber Sample "Cpd 1" being a Control Sample which did not contain a trans 1,4-styrene/butadiene rubber, Cpd 2 containing polymer Sample A and Cpd 3 containing polymer Sample B.

The rubber samples were prepared by mixing the rubber(s) together with reinforcing fillers and other rubber compounding ingredients in a first non-productive mixing stage in an internal rubber mixer for 4 minutes to a temperature of 160°C. The mixture is then further sequentially mixed in an internal rubber mixer for 2 minutes to a temperature of 160°C. The resulting mixture is then mixed in a productive mixing stage in an internal rubber mixer with curatives for 2 minutes to a temperature of 110°C. The rubber composition is cooled to below 40°C between each of the non-productive mixing steps and between the second non-productive mixing step and the productive mixing step.

The basic recipe for the rubber composition samples is presented in the following Table 2.

**Table 2**

| | Parts |
|---|---|
| First Non-Productive Mixing Step | |
| Natural cis 1,4-polyisoprene rubber | 100 or 70 |
| Trans 1,4-styrene/butadiene rubber¹ | 0 or 30 |
| Carbon black, N229² | 50 |
| Processing oil³ | 5 |
| Fatty acid⁴ | 2 |
| Antioxidant⁵ | 2 |
| Zinc oxide | 5 |

| Second Non-Productive Mixing Step | |
|---|---|
| Mixed to 160°, no ingredients added | |

| Productive Mixing Step | |
|---|---|
| Sulfur | 1.4 |
| Accelerator(s)⁶ | 1.0 |

| | |
|---|---|
| ¹High trans 1,4-styrene/butadiene Samples A and B. ²N229, a rubber reinforcing carbon black ASTM designation ³Flexon 641 from the Exxon Mobil Company ⁴Blend comprised of stearic, palmitic and oleic acids ⁵Quinoline type ⁶Tertiary butyl sulfenamide | |

The following Table 3 illustrates cure behavior and various physical properties of the natural rubber-rich rubber compositions based upon the basic recipe of Table 2. Where cured rubber samples are examined, such as for the stress-strain, rebound, hardness, tear strength and abrasion measurements, the rubber samples were cured for 32 minutes at a temperature of 150°C.

**Table 3**

| | Control | | |
|---|---|---|---|
| Rubber Compound (Cpd) Samples | Cpd 1 | Cpd 2 | Cpd 3 |
| Natural cis 1,4-polyisoprene rubber | 100 | 70 | 70 |
| Polymer Sample A, 1.3% styrene | 0 | 30 | 0 |
| Polymer Sample B, 7.2% styrene | 0 | 0 | 30 |

| Rehometer, 150°C (MDR)¹ | | | |
|---|---|---|---|
| Maximum torque (dNm) | 17.8 | 18.8 | 17.6 |
| Minimum torque (dNm) | 2.7 | 3.6 | 3.2 |
| Delta torque (dNm) | 15.1 | 15.2 | 14.4 |
| T90, minutes | 12.1 | 15.8 | 16.5 |

| Stress-strain (ATS)² | | | |
|---|---|---|---|
| Tensile strength (MPa) | 22.6 | 22.4 | 22.5 |
| Elongation at break (%) | 424 | 437 | 451 |
| 300% modulus (ring) (MPa) | 15 | 13.7 | 13.1 |

| Rebound | | | |
|---|---|---|---|
| 23°C | 50 | 52 | 50 |
| 100°C | 64 | 62 | 60 |

| Hardness (Shore A) | | | |
|---|---|---|---|
| 23°C | 65 | 66 | 65 |
| 100°C | 58 | 60 | 59 |
| Tear strength, N (23°C)³ | 253 | 128 | 152 |
| Percent reduction of tear strength | - | -49% | -40% |
| Tear strength, N (95°C)³ | 159 | 101 | 116 |
| Percent reduction of tear strength | - | -36% | -27% |
| DIN Abrasion (2.5N, cc loss)⁴ | 130 | 87 | 98 |

| RPA, 100°C, 1 Hz⁵ | | | |
|---|---|---|---|
| Storage modulus G', at 10% strain (kPa) | 1453 | 1482 | 1450 |
| Tan delta at 10% strain | 0.092 | 0.093 | 0.099 |

¹Data obtained according to Moving Die Rheometer instrument, model MDR-2000 by Alpha Technologies, used for determining cure characteristics of elastomeric materials, such as for example Torque, T90 etc.
²Data obtained according to Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame.
³Data obtained according to a peel strength adhesion (tear strength) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument. The area of contact at the interface between the rubber samples is facilitated by placement of a plastic film (e.g. Mylarä film) between the samples with a cut-out window in the film to enable the two rubber samples to contact each other following which the samples are vulcanized together and the resultant composite of the two rubber compositions used for the peel strength (tear strength) test. For example, an uncured rubber sample is prepared by milling the rubber composition and applying a suitable removable film (e.g. a polyethylene film) to each of the two sides of the milled rubber. Two uncured rubber samples are cut from the milled rubber composition into a size 150 x 150 x 2.4 mm thickness. The polyethylene film is removed from one side of a first sample and a fabric backing (e.g. polyester cord fabric) is stitched to that side with a roller in order to provide dimensional stability for the rubber sample. The polyethylene film is removed from the other side of the first sample and a separator sheet of the Mylar film (with a 5 mm wide x 50 mm long cut out window) is placed and centered on the exposed rubber surface of the sample. The polyethylene film is removed from one side of the second sample. The first and second samples are pressed together with the Mylar film therebetween and stitched together with a roller in a manner that the window in the Mylar film allows the samples to contact each other. The composite of the two samples is placed in the bottom cavity of a preheated diaphram based curing mold. The composite is covered with a sheet of cellophane film. An expandable bladder is positioned onto the cellophane film within the mold and a metal top cover is positioned over the curing bladder to form an assembly thereof, all within the mold. The mold which contains the assembly is placed in a preheated curing press. The press is closed over the mold and an air pressure of 6.9 bar (100 psi) is applied to the expandable bladder with the curing mold through an air line fixture on the curing mold. A cure temperature of 150°C is used. After curing for 32 minutes, the air line to the mold is shut off, the mold removed from the press, followed by removal of the top plate, bladder. The composite is removed from the mold and allowed to cool to 23°C and the cellophane removed. From the cured composite, 25 mm (1 inch) test strips are cut so that the included Mylar film, with its aforesaid window, is located as near to the middle of the test strip as reasonably possible. A portion of the first and second samples at an open end of the test strip (the open end is composed of the first and second rubber samples which are separated by the Mylar film so that a significant portion of the rubber samples are not cured together) are pulled apart to expose open ends of each of the rubber samples and the exposed Mylar film strip is cut off. The pulled-apart ends of the samples are placed into grips of the Instron test machine. The peel adhesion (tear strength) test is conducted at a crosshead speed of the Instron instrument at a of rate of 500 mm/min (20 inches/min) at 95°C. The force to pull apart the portion of the samples cured together within the aforesaid Mylar window is obtained from the data under the load deflection curve reported by the Instron instrument and is expressed as N-cm. For convenience, such tear strength test may be referred to herein as G-tear test.
⁴Data obtained according to DIN 53516 abrasion resistance test procedure using a Zwick drum abrasion unit, model 6102 with 2.5 Newtons force. The DIN abrasion results are reported as relative values to a control rubber composition used by the laboratory.
⁵Data obtained according to Rubber Process Analyzer as RPA 2000^{™} instrument by Alpha Technologies, formerly the Flexsys Company and formerly the Monsanto Company. References to an RPA-2000^{™} instrument may be found in the following publications: H.A. Palowski, et al, Rubber World, June 1992 and January 1997, as well as Rubber & Plastics News, April 26 and May 10, 1993

It is considered herein that a significant physical property of a synthetic elastomer (e.g. the high trans 1,4-styrene/butadiene polymer (rubber) for use in this invention) for consideration as a candidate for an effective partial replacement of natural cis 1,4-polyisoprene rubber is its tear strength property for which it is considered herein should be at least equal to the tear strength of the natural rubber. Insofar as this invention is concerned, only if the tear strength of the synthetic rubber is at least equal to the tear strength of the natural rubber, then the remainder of the indicated physical properties of the high trans 1,4-styrene/butadiene polymer are considered and evaluated for their appropriate values.

Accordingly, for this invention, it is considered herein that if the high trans 1,4-styrene/butadiene polymer does not have sufficient tear strength, it would be inappropriate for use as a significant replacement of natural rubber in a tire tread of a relatively large tire intended, or designed, to experience a significant load under working conditions (during use on an associated vehicle) with a resultant significant internal heat buildup, whether or not its other physical properties would otherwise be appropriate.

Higher tear strength values when measured at 23°C or 95°C are normally desired to promote chip chunk resistance of a tire tread.

Rebound at 100°C and tan delta at 100°C which relate to rolling resistance of the tire and fuel economy for the associated vehicle with higher values being desired for the Rebound property at 100°C and lower values being desired for the tan delta property at 100°C.

Higher values of low strain stiffness properties as indicated by the Shore A hardness values and G' at 10% strain values are desired to promote cornering coefficient, handling and resistance to tire tread wear.

Lower DIN abrasion values are normally desired as representing a resistance to abrasion and being predictive of resistance to tread wear as the associated vehicle is being driven.

From Table 3 it can be seen that a partial replacement of 30 phr of the natural rubber in the natural rubber-rich rubber composition with 30 phr of polymer Sample A (Cpd 2), which had a styrene content of only 1.6 percent, resulted in substantial reductions in tear strengths of the rubber composition of 49 percent at 23°C and 36 percent at 95°C as compared to the natural rubber-rich Control rubber composition (Cpd 1).

From Table 3 it can also be seen that a partial replacement of 30 phr of the natural rubber in the natural rubber-rich rubber composition with 30 phr of polymer Sample B (Cpd 3), which had a somewhat greater styrene content of 7.2 percent, also resulted in substantial reductions in tear strengths of the rubber composition of 40 percent at 23°C and 27 percent at 95°C as compared to the natural rubber-rich Control rubber composition (Cpd 1).

Accordingly, it is considered herein that high trans 1,4-styrene/butadiene copolymer Samples A and B, with their styrene contents of 1.6 and 7.2 percent, respectively, are therefore not suitable for a partial replacement of natural rubber in a natural rubber-rich tire tread because of the large reduction in tear strengths of the resultant rubber compositions.

### EXAMPLE V

### Partial Replacement of Natural Rubber With High Trans 1,4-SBR

Additional experiments were conducted to evaluate a replacement of a portion of natural rubber in a rubber composition with a high trans 1,4-styrene/polybutadiene (HTSBR) polymer Sample B having a bound styrene content of 7.2 percent and high trans 1,4-SBR polymer Sample C having a bound styrene content of 12.5 percent.

Rubber sample blends were prepared with 30 phr of the high trans 1,4-SBR polymer Sample C and high trans 1,4-SBR polymer Sample D. The rubber samples are identified in this Example as rubber Samples "Cpd "4", "Cpd 5" and "Cpd 6" with Rubber Sample "Cpd 4" being a Control Sample without containing a high trans 1,4-styrene/butadiene copolymer.

The rubber compositions were prepared in the manner of Example II.

The basic recipe for the rubber samples is presented in Table 2 of Example II.

The following Table 4 illustrates cure behavior and various physical properties of the rubber compositions.

**Table 4**

| | Control | | |
|---|---|---|---|
| Samples | Cpd 4 | Cpd 5 | Cpd 6 |
| Natural cis 1,4-polyisoprene rubber | 100 | 70 | 70 |
| Polymer Sample B, 7.2% styrene | 0 | 30 | 0 |
| Polymer Sample C, 12.5% styrene | 0 | 0 | 30 |

| Rheometer, 150°C (MDR) | | | |
|---|---|---|---|
| Maximum torque (dNm) | 17.1 | 16.6 | 17.6 |
| Minimum torque (dNm) | 2.6 | 3 | 3 |
| Delta torque (dNm) | 14.5 | 13.6 | 14.6 |
| T90, minutes | 11.6 | 15 | 14.7 |

| Stress-strain (ATS) | | | |
|---|---|---|---|
| Tensile strength (MPa) | 22.9 | 22.9 | 21.8 |
| Elongation at break (%) | 435 | 449 | 433 |
| 300% modulus (ring) (MPa) | 15.0 | 13.8 | 13.8 |

| Rebound | | | |
|---|---|---|---|
| 23°C | 49 | 51 | 50 |
| 100°C | 63 | 61 | 62 |

| Hardness (Shore A) | | | |
|---|---|---|---|
| 23°C | 66 | 66 | 69 |
| 100°C | 60 | 60 | 62 |
| Tear strength, N (23°C) | 336 | 307 | 345 |
| Percent reduction/gain of tear strength | - | -9% | +3% |
| Tear strength, N (95°C) | 139 | 104 | 112 |
| Percent of reduction of tear strength | - | -25% | -19% |
| DIN Abrasion (2.5N, cc loss) | 127 | 95 | 104 |

| RPA, 100°C, 1 Hz | | | |
|---|---|---|---|
| Storage modulus G', at 10% strain (kPa) | 1498 | 1492 | 1574 |
| Tan delta at 10% strain | 0.088 | 0.093 | 0.093 |

From Table 4 it can be seen that a partial replacement of 30 phr of the natural rubber in the natural rubber-rich rubber composition with 30 phr of polymer Sample B (Cpd 5), which had a styrene content of only 7.2 percent, resulted in reductions in tear strengths of the resulting rubber compositions of 9 percent at 23°C and 25 percent at 95°C as compared to the natural rubber-rich Control rubber composition (Cpd 4).

From Table 4 it can also be seen that a partial replacement of 30 phr of the natural rubber in the natural rubber-rich rubber composition with 30 phr of polymer Sample C (Cpd 6), which had a significantly greater styrene content of 12.5 percent, resulted in an actual increase in tear strength of the rubber composition of 3 percent at 23°C, and therefore comparable to the natural rubber-rich Control rubber composition (Cpd 4) although it exhibited a significant reduction in tear strength of 19 percent at 95°C as compared to the natural rubber-rich Control rubber composition (Cpd 4).

Accordingly, from Table 4 it would appear that a higher content of bound styrene, (e.g. 12.5 percent styrene for Cpd 6 versus 7.2 percent styrene for Cpd 5), in the high trans 1,4-styrene/butadiene copolymer would be more favorable for maintaining tear strength of the natural rubber-rich rubber composition, although the tear strength property at 95°C is still not considered herein to be acceptable for using the 12.5 percent styrene-containing trans 1,4-styrene/butadiene copolymer elastomer as a partial replacement for natural rubber in the natural rubber-rich rubber composition.

This is considered herein to be suggestive that a somewhat higher styrene-containing trans 1,4-styrene/butadiene copolymer elastomer might be suitable for partial replacement of natural rubber in the natural rubber-rich rubber composition.

### EXAMPLE V

### Partial Replacement of Natural Rubber With High Trans 1,4-SBR

Additional experiments were conducted to evaluate a replacement of a portion of natural rubber in a rubber composition with the high trans 1,4-styrene/polybutadiene (SBR) polymer Sample B having a bound styrene content of 7.2 percent and the high trans 1,4-SBR polymer Sample D having a bound styrene content of 26 percent.

Natural rubber rich rubber composition samples were prepared which contained 30 phr of the high trans 1,4-SBR polymer Sample C and high trans 1,4-SBR polymer Sample D, respectively, and identified in this Example as rubber Samples "Cpd "7", "Cpd 8" and "Cpd 9", respectively, with Rubber Sample "Cpd 7" being a Control Sample which did not contain a high trans 1,4-styrene/butadiene copolymer.

The rubber compositions were prepared in the manner of Example II.

The basic recipe for the rubber samples is presented in Table 2 of Example II.

The following Table 5 illustrates cure behavior and various physical properties of the rubber compositions.

**Table 5**

| | Control | | |
|---|---|---|---|
| Samples | Cpd 7 | Cpd 8 | Cpd 9 |
| Natural cis 1,4-polyisoprene rubber | 100 | 70 | 70 |
| Polymer Sample B, 7.2% styrene | 0 | 30 | 0 |
| Polymer Sample D, 26% styrene | 0 | 0 | 30 |

| Rheometer, 150°C (MDR) | | | |
|---|---|---|---|
| Maximum torque (dNm) | 17.9 | 17.8 | 17.7 |
| Minimum torque (dNm) | 2.9 | 3.1 | 3.1 |
| Delta torque (dNm) | 15 | 14.7 | 14.5 |
| T90, minutes | 13.4 | 17.8 | 18.2 |

| Stress-strain (ATS) | | | |
|---|---|---|---|
| Tensile strength (MPa) | 24.8 | 23.5 | 23.6 |
| Elongation at break (%) | 446 | 445 | 465 |
| 300% modulus (ring) (MPa) | 16.2 | 14.6 | 14 |

| Rebound | | | |
|---|---|---|---|
| 23°C | 50 | 52 | 46 |
| 100°C | 65 | 63 | 60 |

| Hardness (Shore A) | | | |
|---|---|---|---|
| 23°C | 67 | 67 | 68 |
| 100°C | 62 | 62 | 61 |
| Tear strength, N (23°C) | 328 | 248 | 326 |
| Percent reduction of tear strength | - | -24% | -1 % |
| Tear strength, N (95°C) | 138 | 106 | 133 |
| Percent of reduction of tear strength | - | -23% | -4% |
| DIN Abrasion (2.5N, cc loss) | 118 | 94 | 115 |

| RPA, 100°C, 1 Hz | | | |
|---|---|---|---|
| Storage modulus G', at 10% strain (kPa) | 1467 | 1507 | 1465 |
| Tan delta at 10% strain | 0.091 | 0.097 | 0.103 |

From Table 5 it can be seen that a partial replacement of 30 phr of the natural rubber in the natural rubber-rich rubber composition with 30 phr of polymer Sample B (Cpd 8), which had a styrene content of only 7.2 percent, resulted, for this Example, in reductions in tear strengths of the resulting rubber compositions of 24 percent at 23°C and 23 percent at 95°C as compared to the natural rubber-rich Control rubber composition (Cpd 7).

From Table 5 it can also be seen that a partial replacement of 30 phr of the natural rubber in the natural rubber-rich rubber composition with 30 phr of polymer Sample D (Cpd 9), which had a significantly greater styrene content of 26 percent, resulted in a tear strength reduction of the rubber composition of only one percent at 23°C and 4 percent at 95°C, and therefore a retention of at least 90 percent of the tear strength of the natural rubber-rich Control rubber composition (Cpd 7).

Accordingly, from Table 5 it would appear that higher levels of bound styrene contents (e.g. 26 percent styrene) in the high trans 1,4-styrene/butadiene copolymer for partial replacement of natural rubber in the natural rubber-rich Control rubber composition (Cpd 7) would be more favorable for providing a tear strength property of the resulting rubber composition (Cpd 9) which is at least 90 percent of the tear resistance property of the natural rubber rich composition (Cpd 7) itself.

The other significant cured properties of the natural rubber-rich rubber composition (Cpd 9) relating to stiffness , hysteresis (rebound) and abrasion resistance are considered acceptable when the natural rubber is replaced with 30 phr of high tans 1,4-styrene/butadiene copolymer of Sample D where the tear resistance properties at both 23°C and 95°C of the resulting rubber composition are at least 90 percent of the Control rubber composition (Cpd 7).

### EXAMPLE VI

### Partial Replacement of Natural Rubber With High Trans 1,4-SBR

Additional experiments were conducted to evaluate a replacement of a portion of natural rubber in a rubber composition with the high trans 1,4-styrene/polybutadiene (SBR) polymer Sample D having a bound styrene content of 26 percent and the high trans 1,4-SBR polymer Sample E having a bound styrene content of 35 percent.

Natural rubber rich rubber composition samples were prepared which contained 30 phr of the high trans 1,4-SBR polymer Sample D and high trans 1,4-SBR polymer Sample E, respectively, and identified in this Example as rubber Samples "Cpd "10", "Cpd 11" and "Cpd 12", respectively, with Rubber Sample "Cpd 10" being a Control Sample which did not contain a high trans 1,4-styrene/butadiene copolymer.

The rubber compositions were prepared in the manner of Example II.

The basic recipe for the rubber samples is presented in Table 2 of Example II.

The following Table 6 illustrates cure behavior and various physical properties of the rubber compositions.

**Table 6**

| | Control | | |
|---|---|---|---|
| Samples | Cpd 7 | Cpd 8 | Cpd 9 |
| Natural cis 1,4-polyisoprene rubber | 100 | 70 | 70 |
| Polymer Sample D, 26% styrene | 0 | 30 | 0 |
| Polymer Sample E, 35% styrene | 0 | 0 | 30 |

| Rheometer, 150°C (MDR) | | | |
|---|---|---|---|
| Maximum torque (dNm) | 17.7 | 17.5 | 17.2 |
| Minimum torque (dNm) | 3 | 2.7 | 3 |
| Delta torque (dNm) | 14.7 | 14.8 | 14.2 |
| T90, minutes | 13.2 | 18.2 | 18.3 |

| Stress-strain (ATS) | | | |
|---|---|---|---|
| Tensile strength (MPa) | 23.6 | 22.9 | 22.1 |
| Elongation at break (%) | 455 | 472 | 480 |
| 300% modulus (ring) (MPa) | 14 | 12.7 | 12.4 |

| Rebound | | | |
|---|---|---|---|
| 23°C | 50 | 45 | 37 |
| 100°C | 63 | 58 | 54 |

| Hardness (Shore A) | | | |
|---|---|---|---|
| 23°C | 63 | 67 | 70 |
| 100°C | 58 | 60 | 60 |
| Tear strength, N (23°C) | 324 | 309 | 336 |
| Percent reduction/increase of tear strength | - | -5% | +4% |
| Tear strength, N (95°C) | 146 | 133 | 142 |
| Percent of reduction of tear strength | - | -9% | -3% |
| DIN Abrasion (2.5N, cc loss) | 122 | 108 | 130 |

| RPA, 100°C, 1 Hz | | | |
|---|---|---|---|
| Storage modulus G', at 10% strain (kPa) | 1428 | 1403 | 1761 |
| Tan delta at 10% strain | 0.084 | 0.098 | 0.122 |

From Table 6 it is seen in Cpd 9 that a partial replacement of the natural rubber with 30 phr of the trans 1,4-styrene/butadiene polymer Sample E, which contained 35 percent styrene, resulted in tear strength values comparable (within 10 percent of the tear strength property of the Control Cpd 7) to the Control natural rubber composition Cpd 7 as well as Cpd 8 in which a partial replacement of the natural rubber with 30 phr of the trans 1,4-styrene/butadiene polymer D which contained 26 percent bound styrene.

However, the hysteretic properties, namely Rebound at 100°C and tan delta at 100°C are considered herein to be not acceptable (a reduction of more than 10 percent of the hot rebound value for Control Cpd 7) for use in a natural rubber-based tire tread in a sense that the high trans 1,4-styrene/butadiene copolymer is too hysteretic and therefore being too prone to heat build up during operation of the tire under loaded conditions. This would indicate that the level of styrene in the copolymer should be below 35 percent when the high trans 1,4-styrene/butadiene copolymer is used as a partial replacement for the natural rubber in a natural rubber-based tire tread.

### EXAMPLE VII

### Partial Replacement of Natural Rubber With High Trans 1,4-SBR

Additional experiments were conducted to evaluate a replacement of a portion of natural rubber in a rubber composition with various amounts of high trans 1,4-styrene/polybutadiene (HTSBR) polymer Sample D having a bound styrene content of 26 percent .The rubber samples are identified in this Example as rubber Samples "Cpd "13" through "Cpd 18" with rubber composition Sample "Cpd 13" being a Control Sample without a high trans 1,4-styrene/butadiene polymer. The rubber compositions were prepared in the manner of Example II.

The basic recipe for the rubber samples is presented in Table 2 of Example II.

The following Table 7 illustrates cure behavior and various physical properties of the rubber compositions.

**Table 7**

| | Control | | | | | |
|---|---|---|---|---|---|---|
| Samples | Cpd 13 | Cpd 14 | Cpd 15 | Cpd 16 | Cpd 17 | Cpd 18 |
| Natural cis 1,4-polyisoprene rubber | 100 | 90 | 80 | 70 | 60 | 50 |
| Polymer Sample D, 26% styrene | 0 | 10 | 20 | 30 | 40 | 50 |

| Rheometer, 150°C (MDR) | | | | | | |
|---|---|---|---|---|---|---|
| Maximum torque (dNm) | 17.6 | 17.9 | 17.9 | 17.9 | 17.8 | 17.7 |
| Minimum torque (dNm) | 2.9 | 2.9 | 3 | 3.2 | 3.2 | 3.2 |
| Delta torque (dNm) | 14.7 | 15 | 14.9 | 14.7 | 14.6 | 14.5 |
| T90, minutes | 13.5 | 15.3 | 16.7 | 18.3 | 19.7 | 21.6 |

| Stress-strain (ATS) | | | | | | |
|---|---|---|---|---|---|---|
| Tensile strength (MPa) | 23.2 | 22.8 | 23.5 | 23.3 | 22.7 | 21.3 |
| Elongation at break (%) | 446 | 453 | 462 | 469 | 467 | 446 |
| 300% modulus (ring) (MPa) | 14.7 | 13.8 | 14.1 | 13.5 | 13.2 | 13 |
| Rebound | | | | | | |
| 23°C | 49 | 46 | 45 | 45 | 45 | 45 |
| 100°C | 63 | 60 | 61 | 58 | 57 | 56 |

| Hardness (Shore A) | | | | | | |
|---|---|---|---|---|---|---|
| 23°C | 66 | 66 | 68 | 67 | 67 | 68 |
| 100°C | 61 | 61 | 61 | 61 | 61 | 62 |
| Tear strength, N (23°C) | 335 | 345 | 324 | 349 | 317 | 332 |
| Reduction/increase of tear strength | - | +3% | -3% | 0.04 | -5% | -1% |
| Tear strength, N (95°C) | 149 | 151 | 154 | 150 | 137 | 112 |
| Reduction/increase of tear strength | - | +2% | +3% | +1 % | -8% | -25% |
| DIN Abrasion (2.5N, cc loss) | 117 | 117 | 108 | 114 | 111 | 106 |

| RPA, 100°C, 1 Hz | | | | | | |
|---|---|---|---|---|---|---|
| Storage modulus G', at 10% strain (kPa) | 1403 | 1434 | 1442 | 1431 | 1440 | 1390 |
| Tan delta at 10% strain | 0.091 | 0.092 | 0.098 | 0.107 | 0.108 | 0.114 |

From Table 7 it is seen that the high trans 1,4-styrene/butadiene Polymer Sample D, containing 26 percent bound styrene, which was previously observed to have an optimum styrene level when used at a partial replacement amount of 30 phr for the natural rubber composition, provides adequate tear strength when used at partial replacement levels of natural rubber from as low as 10 phr and up to an amount of 40 phr. The other significant properties, including stiffness are considered to be acceptable.

However, when the high trans 1,4-styrene/butadiene copolymer is used in an amount of 50 phr replacement for the natural rubber, namely Cpd 18, the tear strength (95°C) of the resulting rubber composition was reduced significantly and therefore not considered herein to be not suitable for a natural rubber-based tire tread intended for heavy use and thereby promotion of resultant internal heat buildup.

The resultant combination of tear strength and rebound values for the rubber compositions, namely Cpd 14 through Cpd 17, as compared to Control Cpd 13, indicates that such high trans 1,4-styrene/butadiene copolymer elastomer may be suitably substituted for up to 50 phr of the natural rubber in the natural rubber-rich rubber composition for a natural rubber-rich tire tread.

## Claims

1. A natural rubber-rich rubber composition comprising, based upon parts by weight per 100 parts by weight rubber (phr):
(A) from 2 to 45 phr of a trans 1,4-styrene/butadiene copolymer elastomer having a bound styrene content in a range of from 15 to 35 percent and a microstructure of the polybutadiene portion composed of from 50 to 80 percent trans 1,4- isomeric units, from 10 to 20 percent cis 1,4- isomeric units and from 2 to 10 percent vinyl 1,2- isomeric units;
(B) from 55 to 98 phr of natural cis 1,4-polyisoprene rubber
(C) from zero to 20 phr of at least one additional synthetic diene-based elastomer, so long as said natural rubber content of said rubber composition is at least 55 phr, selected from polymers of isoprene and/or 1,3-butadiene and copolymers of styrene together with isoprene and/or 1,3-butadiene; and
(D) from 30 to 120 phr of particulate reinforcing fillers comprising:
(1) from 5 to 120 phr of rubber reinforcing carbon black, and
(2) from zero to 60 phr of amorphous synthetic silica;
**characterized in that** said trans 1,4-styrene/butadiene copolymer is prepared by polymerization in an organic solvent in the presence of a catalyst composite composed of:
(i) the barium salt of di(ethylene glycol) ethylether (BaDEGEE), tri-n-octylaluminum (TOA) and n-butyl lithium (n-BuLi) in a molar ratio of the BaDEGEE to TOA to n-BuLi of 1:4:3, so long the resulting trans 1,4-styrene/butadiene copolymer is said trans 1,4-styrene/butadiene copolymer, or
(ii) the barium salt of 2-N,N-dimethyl amino ethoxy ethanol (Ba-N,N-DMEE), tri-n-octylaluminum (TOA) and n-butyl lithium (n-BuLi) in a molar ratio of the Ba-N,N-DMEE to TOA to n-BuLi of 1:4:3, so long the resulting trans 1,4-styrene/butadiene copolymer is said trans 1,4-styrene/butadiene copolymer, or
(iii) the barium salt of di(ethylene glycol) ethylether (BaDEGEE), amine, tri-n-octylaluminum (TOA) and n-butyl lithium (n-BuLi) in a molar ratio of the BaDEGEE to amine to TOA to n-BuLi of 1:1:4:3, wherein said amine is selected from n-butyl amine, isobutyl amine, tert-butyl amine, pyrrolidine, piperidine and TMEDA (N, N, N',N'-tetramethylethylenediamine so long as the resulting trans 1,4-styrene/butadiene copolymer is the said trans 1,4-styrene/butadiene copolymer,

2. The composition of claim 1, wherein said natural rubber-rich tread composition comprises:
(A) from 5 to 40 phr of said trans 1,4-styrene/butadiene copolymer elastomer;
(B) from 95 to 60 phr of said natural cis 1,4-polyisoprene rubber;
(C) from zero to 20 phr of at least one additional synthetic diene-based elastomer, so long as said natural rubber content of said rubber composition is at least 55 phr, selected from polymers of isoprene and/or 1,3-butadiene and copolymers of styrene together with isoprene and/or 1,3-butadiene;
(D) from 30 to 120 phr of particulate reinforcing fillers comprising:
(1) from 30 to 115 phr of rubber reinforcing carbon black, and
(2) from 5 to 25 phr of amorphous synthetic silica.

3. The composition of either of the preceding claims, wherein said high trans 1,4-styrene/butadiene copolymer elastomer has a styrene content in a range of from 20 to 30 percent, and/or a Mooney (ML 1+4) viscosity at 100°C in a range of from 50 to 100, preferably of from 50 to 85, an/or a Tg in a range of from -60°C to -90°C.

4. The composition of at least one of the preceding claims, wherein said natural rubber-rich rubber composition has a tear resistance property at both 23°C and 95°C according to test G-tear of at least 90 percent of the corresponding tear resistance properties of the natural rubber-rich rubber composition in the absence of said trans 1,4-styrene/butadiene copolymer elastomer.

5. The composition of at least one of the preceding claims, wherein said natural rubber-rich rubber composition contains from 5 to 15 phr of said additional diene-based elastomer.

6. The composition of at least one of the preceding claims, wherein, for said natural rubber-rich rubber composition, said additional synthetic diene based elastomer is selected from at least one of synthetic cis 1,4-polyisoprene rubber, cis 1,4-polybutadiene rubber, styrene/butadiene copolymer rubber, isoprene/butadiene copolymer rubber, styrene/isoprene/butadiene terpolymer rubber, and 3,4-polyisoprene rubber.

7. The composition of at least one of the preceding claims, wherein said natural rubber-rich rubber tread composition contains a silica coupler having a moiety reactive with hydroxyl groups on the silica and another moiety interactive with the elastomer(s).

8. The composition of at least one of the preceding claims wherein, for said natural rubber-rich rubber composition, said reinforcing filler also contains a silica-containing carbon black which contain domains of silica on its surface wherein the silica domains contain hydroxyl groups on their surfaces.

9. A tire having a tread of rubber composition according to at least one of the previous claims.

## Patentansprüche

1. Naturkautschukreiche Kautschukzusammensetzung, umfassend, basiert auf Gewichtsteilen pro 100 Gewichtsteile Kautschuk (ThK) :
(A) 2 bis 45 ThK eines trans 1,4-Styrol-Butadien-Copolymerelastomers mit einem Gehalt an gebundenem Styrol in einem Bereich von 15 bis 35 Prozent und einer Mikrostruktur des Polybutadienanteils, zusammengesetzt aus 50 bis 80 Prozent trans 1,4-Isomereinheiten, 10 bis 20 Prozent cis 1,4-Isomereinheiten und 2 bis 10 Prozent Vinyl-1,2-Isomereinheiten ;
(B) 55 bis 98 ThK natürlichen cis 1,4-Polyisoprenkautschuk ;
(C) Null bis 20 ThK mindestens eines zusätzlichen synthetischen dienbasierten Elastomers, solange der Naturkautschukgehalt der Kautschukzusammensetzung mindestens 55 ThK beträgt, gewählt aus Polymeren von Isopren und/oder 1,3-Butadien und Copolymeren von Styrol, zusammen mit Isopren und/oder 1,3-Butadien ; und
(D) 30 bis 120 ThK partikelförmige Verstärkungsfüllstoffe, umfassend :
(1) 5 bis 120 ThK Kautschukverstärkungs-Carbon Black, und
(2) Null bis 60 ThK amorphes synthetisches Silika
**dadurch gekennzeichnet, dass** das trans 1,4-Styrol-Butadien-Copolymer hergestellt wird durch Polymerisation in einem organischen Lösungsmittel in Gegenwart eines Katalysatorverbundmaterials, zusammengesetzt aus :
(i) dem Bariumsalz von Di (ethylenglykol) ethylether (BaDEGEE), Tri-n-octylaluminium (TOA) und n-Butyllithium (n-BuLi) in einem Molverhältnis des BaDEGEE zu TOA zu n-BuLi von 1 :4 :3, solange das resultierende trans 1,4-Styrol-Butadien-Copolymer das besagte trans 1,4-Styrol-Butadien-Copolymer ist, oder
(ii) dem Bariumsalz von 2-N,N-Dimethylaminoethoxyethanol (Ba-N,N-DMEE), Tri-n-octylaluminium (TOA) und n-Butyllithium (n-BuLi) in einem Molverhältnis des Ba-N,N-DMEE zu TOA zu n-BuLi von 1 :4 :3, solange das resultierende trans 1,4-Styrol-Butadien-Copolymer das besagte trans 1,4-Styrol-Butadien-Copolymer ist, oder
iii) dem Bariumsalz von Di (ethylenglykol) ethylether (BaDEGEE), Amin, Tri-n-octylaluminium (TOA) und n-Butyllithium (n-BuLi) in einem Molverhältnis des BaDEGEE zu Amin zu TOA zu n-BuLi von 1 :1 :4 :3, wobei besagtes Amin aus n-Butylamin, Isobutylamin, tert-Butylamin, Pyrrolidin, Piperidin und TMEDA (N,N,N',N'-Tetramethylethylendiamin) ausgewählt ist, solange das resultierende trans 1,4-Styrol-Butadien-Copolymer das besagte trans 1,4-Styrol-Butadien-Copolymer ist.

2. Zusammensetzung von Anspruch 1, wobei die naturkautschukreiche Laufflächenzusammensetzung umfasst
(A) 5 bis 40 ThK des besagten trans 1,4-Styrol-Butadien-Copolymerelastomers ;
(B) 95 bis 60 ThK des natürlichen cis 1,4-Polyisoprenkautschuks ;
(C) Null bis 20 ThK mindestens eines zusätzlichen synthetischen dienbasierten Elastomers, solange der Naturkautschukgehalt der Kautschukzusammensetzung mindestens 55 ThK beträgt, gewählt aus Polymeren von Isopren und/oder 1,3-Butadien und Copolymeren von Styrol, zusammen mit Isopren und/oder 1,3-Butadien ; und
(D) 30 bis 120 ThK partikelförmige Verstärkungsfüllstoffe, umfassend :
(1) 30 bis 115 ThK Kautschukverstärkungs-Carbon Black, und
(2) 5 bis 25 ThK amorphes synthetisches Silika.

3. Zusammensetzung von einem der vorhergehenden Ansprüche, wobei das 1,4-Styrol-Butadien-Copolymerelastomer mit hohem trans Gehalt einen Styrolgehalt in einem Bereich von 20 bis 30 Prozent und/oder eine Mooney (ML 1+4) -Viskosität bei 100 °C in einem Bereich von 50 bis 100, bevorzugt von 50 bis 85, und/oder eine Tg in einem Bereich von -60 °C bis -90 °C aufweist.

4. Zusammensetzung von mindestens einem der vorhergehenden Ansprüche, wobei die naturkautschukreiche Kautschukzusammensetzung eine Reißfestigkeitseigenschaft bei sowohl 23 °C als auch 95 °C gemäß G-Reißfestigkeitstest von mindestens 90 Prozent der entsprechenden Reißfestigkeitseigenschaften der naturkautschukreichen Kautschukzusammensetzung in Abwesenheit besagten trans 1,4-Styrol-Butadien-Copolymerelastomers aufweist.

5. Zusammensetzung von mindestens einem der vorhergehenden Ansprüche, wobei die naturkautschukreiche Kautschukzusammensetzung 5 bis 15 ThK des zusätzlichen dienbasierten Elastomers enthält.

6. Zusammensetzung von mindestens einem der vorhergehenden Ansprüche, wobei, für die naturkautschukreiche Kautschukzusammensetzung, das zusätzliche synthetische dienbasierte Elastomer aus mindestens einem von synthetischem cis 1,4-Polyisoprenkautschuk, cis 1,4-Polybutadienkautschuk, Styrol-Butadien-Copolymerkautschuk, Isopren-Butadien-Copolymerkautschuk, Styrol-Isopren-Butadien-Terpolymerkautschuk und 3,4-Polyisoprenkautschuk ausgewählt ist.

7. Zusammensetzung von mindestens einem der vorhergehenden Ansprüche, wobei die naturkautschukreiche Kautschuk-Laufflächenzusammensetzung ein Silikakopplungsmittel mit einem Anteil, der mit Hydroxylgruppen an dem Silika reaktiv ist, und einem anderen Anteil, der mit dem bzw. den Elastomer (en) in Wechselwirkung tritt, enthält.

8. Zusammensetzung von mindestens einem der vorhergehenden Ansprüche, wobei, für die naturkautschukreiche Kautschukzusammensetzung, der Verstärkungsfüllstoff auch ein silikahaltiges Carbon Black enthält, das Domänen von Silika an seiner Oberfläche enthält, wobei die Silikadomänen Hydroxylgruppen an ihren Oberflächen enthalten.

9. Reifen mit einer Lauffläche aus Kautschukzusammensetzung gemäß mindestens einem der vorigen Ansprüche.

## Revendications

1. Composition de caoutchouc riche en caoutchouc naturel, comprenant, basés sur des parties en poids par 100 parties en poids de caoutchouc (phr) :
(A) à concurrence de 2 à 45 phr, un élastomère de copolymère de trans 1,4-styrène/butadiène possédant une teneur en styrène lié dans la plage de 15 à 35 %, la microstructure de la portion de polybutadiène étant composée, à concurrence de 50 à 80 %, par des unités isomères trans 1,4, à concurrence de 10 à 20 %, par des unités isomères cis 1,4 et à concurrence de 2 à 10 %, par des unités vinyle 1,2 ;
(B) à concurrence de 55 à 98 phr, du caoutchouc naturel de cis 1,4-polyisoprène ;
(C) à concurrence de 0 à 20 phr d'au moins un élastomère synthétique supplémentaire à base diénique, pour autant que ladite teneur en caoutchouc naturel de ladite composition de caoutchouc représente au moins 55 phr, choisi parmi des polymères d'isoprène et/ou de 1,3-butadiène et des copolymères de styrène conjointement avec de l'isoprène et/ou du 1,3-butadiène ; et
(D) à concurrence de 30 à 120 phr, des matières de charge particulaires pour le renforcement, comprenant :
(1) à concurrence de 5 à 120 phr, du noir de carbone pour le renforcement du caoutchouc ;
(2) à concurrence de 0 à 60 phr, de la silice synthétique amorphe ;
**caractérisée en ce qu'**on prépare ledit copolymère de trans 1,4-styrène/butadiène par polymérisation dans un solvant organique en présence d'un composite de catalyseur composé :
(i) du sel de baryum de l'éther éthylique de diéthylèneglycol (BaDEGEE), du tri-n-octylaluminium (TOA) et du n-butyl lithium (N-BuLi) dans le rapport molaire du BaDEGEE au TOA au N-BuLi de 1:4:3, pour autant que le copolymère résultant de trans 1,4-styrène/butadiène soit ledit copolymère de trans 1,4-styrène/butadiène ; ou
(ii) du sel de baryum du 2-N,N-diméthylaminoéthoxy-éthanol (Ba-N,N-DMEE), du tri-n-octylaluminium (TOA) et du n-butyl lithium (N-BuLi) dans le rapport molaire du Ba-N,N-DMEE au TOA au N-BuLi de 1:4:3, pour autant que le copolymère résultant de trans 1,4-styrène/butadiène soit ledit copolymère de trans 1,4-styrène/butadiène ; ou
(iii) du sel de baryum de l'éther éthylique de diéthylèneglycol (BaDEGEE), d'une amine, du tri-n-octylaluminium (TOA) et du n-butyl lithium N-BuLi dans le rapport molaire du BaDEGEE à l'amine au TOA au N-BuLi de 1:1:4:3, ladite amine étant choisie parmi le groupe comprenant la n-butylamine, l'isobutylamine, la tert-butylamine, la pyrrolidine, la pipéridine et la TMEDA (la N,N,N',N'-tétraméthyléthylènediamine), pour autant que le copolymère résultant de trans 1,4-styrène/butadiène soit ledit copolymère de trans 1,4-styrène/butadiène.

2. Composition selon la revendication 1, dans laquelle ladite composition de bande de roulement riche en caoutchouc naturel comprend :
(A) à concurrence de 5 à 40 phr, ledit élastomère de copolymère de trans 1,4-styrène/butadiène ;
(B) à concurrence de 95 à 60 phr, ledit caoutchouc naturel de cis 1,4-polyisoprène ;
(C) à concurrence de chiffres de 0 à 20 phr, au moins un élastomère synthétique supplémentaire à base diénique, pour autant que ladite teneur en caoutchouc naturel de ladite composition de caoutchouc représente au moins 55 phr, choisi parmi des polymères d'isoprène et/ou de 1,3-butadiène et des copolymères de styrène conjointement avec de l'isoprène et/ou du 1,3-butadiène ; et
(D) à concurrence de 30 à 120 phr, des matières de charge particulaires pour le renforcement, comprenant .
(1) à concurrence de 30 à 115 phr, du noir de carbone pour le renforcement du caoutchouc ;
(2) à concurrence de 5 à 25 phr, de la silice synthétique amorphe.

3. Composition selon l'une quelconque des revendications précédentes, dans lequel ledit élastomère de copolymère de trans 1,4-styrène/butadiène possède une teneur en styrène dans la plage de 20 à 30 % et/ou une consistance Mooney (ML 1+4) à 100 °C dans la plage de 50 à 100, de préférence de 50 à 85 et/ou une valeur Tg dans la plage de -60 °C à -90 °C.

4. Composition selon au moins une des revendications précédentes, dans laquelle ladite composition de caoutchouc riche en caoutchouc naturel possède une propriété de résistance à la fissuration, à la fois à 23 °C et à 95 °C, conformément au test « G-tear » représentant au moins 90 % de la propriété correspondante de résistance à la fissuration que manifeste la composition de caoutchouc riche en caoutchouc naturel en l'absence dudit élastomère de copolymère de trans 1,4-styrène/butadiène.

5. Composition selon au moins une des revendications précédentes, dans laquelle ladite composition de caoutchouc riche en caoutchouc naturel contient ledit élastomère supplémentaire à base diénique à concurrence de 5 à 15 phr.

6. Composition selon au moins une des revendications précédentes, dans laquelle, pour ladite composition de caoutchouc riche en caoutchouc naturel, ledit élastomère synthétique supplémentaire à base diénique représente au moins un membre choisi parmi le groupe comprenant du caoutchouc synthétique de cis 1,4-polyisoprène, du caoutchouc de cis 1,4-polybutadiène, du caoutchouc de copolymère de styrène/butadiène, du caoutchouc de copolymère d'isoprène/butadiène, du caoutchouc des terpolymères de styrène/isoprène/butadiène et du caoutchouc de 3,4-polyisoprène.

7. Composition selon au moins une des revendications précédentes, dans laquelle ladite composition de bande de roulement en caoutchouc riche en caoutchouc naturel contient un agent de couplage pour la silice possédant une fraction apte à réagir avec les groupes hydroxyle sur la silice et une autre fraction entrant en interaction avec ledit/lesdits élastomères.

8. Composition selon au moins une des revendications précédentes, dans laquelle, pour ladite composition de caoutchouc riche en caoutchouc naturel, ladite matière de charge pour le renforcement contient également un noir de carbone contenant de la silice, qui contient des domaines de silice sur sa surface, les domaines de silice contenant des groupes hydroxyle sur leur surface.

9. Bandage pneumatique possédant une bande de roulement d'une composition de caoutchouc selon au moins une des revendications précédentes.
